Europäisches Patentamt

European Patent Office

Office européen des brevets

(11) Numéro de publication : **0 430 813 B1**

# (12) FASCICULE DE BREVET EUROPEEN

(45) Date de publication du fascicule du brevet :
**29.12.93 Bulletin 93/52**

(51) Int. Cl.⁵ : **B60R 21/13**

(21) Numéro de dépôt : **90403408.9**

(22) Date de dépôt : **30.11.90**

(54) **Système de sécurité pour véhicule automobile.**

(30) Priorité : **01.12.89 FR 8915858**

(43) Date de publication de la demande :
**05.06.91 Bulletin 91/23**

(45) Mention de la délivrance du brevet :
**29.12.93 Bulletin 93/52**

(84) Etats contractants désignés :
**DE GB IT**

(56) Documents cités :
**WO-A-87/05570**
**FR-A- 2 357 405**
**GB-A- 2 184 586**
**GB-A- 2 186 369**
**REVUE AUTOMOBILE. vol. 85, no. 40, 27 septembre 1990, BERNE CH page 15 "laguna, une étude de Renault"**

(73) Titulaire : **REGIE NATIONALE DES USINES RENAULT S.A.**
**34, Quai du Point du Jour**
**F-92109 Boulogne Billancourt Cédex (FR)**

(72) Inventeur : **Saint Martin, Philippe**
**11, rue de Strasbourg**
**F-78600 Houilles (FR)**
Inventeur : **Guillot, Lionel**
**34, rue Saint-Dominique**
**F-75007 Paris (FR)**
Inventeur : **Garajedagui, Fereydoun**
**1 bis, rue Castéja**
**F-92100 Boulogne Billancourt (FR)**
Inventeur : **Landreau, Thierry**
**23, avenue Auguste Renoir**
**F-78160 Marly Le Roi (FR)**
Inventeur : **Rochette, Bertrand**
**9, Rue Jonguoy**
**F-75014 Paris (FR)**

(74) Mandataire : **Srour, Elie et al**
**8 & 10 Avenue Emile Zola**
**F-92109 Boulogne Billancourt (FR)**

Jouve, 18, rue Saint-Denis, 75001 PARIS

## Description

La présente invention a pour objet un système de sécurité pour véhicule automobile comprenant des moyens pour commander au moins un organe de sécurité en situation de retournement du véhicule.

Pour des raisons de sécurité en cas de retournement, le document GB-A-2 184 586 décrit un arceau de sécurité fixe et déployé sur les véhicules de type coupé. Pour des raisons esthétiques, on cherche à éviter cet arceau fixe. On a déjà envisagé de monter un arceau escamotable abaissé en position de repos. Cet arceau se met automatiquement en position relevée dès l'amorce d'un retournement.

La présente invention a pour but de fournir un système de sécurité d'un organe de sécurité dont le pilotage permet de discriminer, avec une bonne précision, les cas de retournement notamment liés aux dérapages.

Selon une caractéristique, le système de sécurité comporte un gyromètre mesurant la vitesse de rotation de roulis et des accéléromètres et des moyens électroniques pour traiter les signaux de ce gyromètre et des accéléromètres pour commander l'actionnement de l'organe de sécurité.

Selon une caractéristique, le système comporte des moyens de traitement pour calculer le rapport d'accélération transversale sur l'accélération verticale et si ce rapport dépose un seuil prédéterminé pour autoriser l'intégration de la vitesse angulaire de roulis issue du gyromètre pendant une période de temps prédéterminée et si le signal résultant de l'intégration dépose une valeur seuil prédéterminée ($S_2$) pour commander l'actionnement de l'organe de sécurité.

Selon une caractéristique, le système comporte des moyens de traitement pour calculer un module de l'accélération dans le plan du véhicule à partir des signaux d'accélération longitudinale et d'accélération transversale des accéléromètres si cette valeur dépasse un seuil prédéterminé pour autoriser l'intégration de la vitesse angulaire de roulis issue du gyromètre pendant une période de temps prédéterminée et si le signal résultant de l'intégration dépasse une valeur seuil prédéterminée ($S_2$) pour commander l'actionnement de l'organe de sécurité.

Selon une caractéristique, la commande du système de sécurité est actionnée lors de forte valeur de la vitesse de rotation de roulis du véhicule.

Selon une caractéristique, le système comporte des moyens de traitement pour calculer un module de l'accélération dans le plan du véhicule à partir des signaux d'accélération transversale et d'accélération longitudinale et si ce module dépasse un seuil prédéterminé ($S_2$) pour commander l'actionnement de la commande de l'organe de sécurité.

L'invention va maintenant être décrite avec plus de détail en se référant à un mode de réalisation donné à titre d'exemple et représenté par les dessins annexés sur lesquels:
- La figure 1 est une vue partielle d'un véhicule équipé du dispositif selon l'invention,

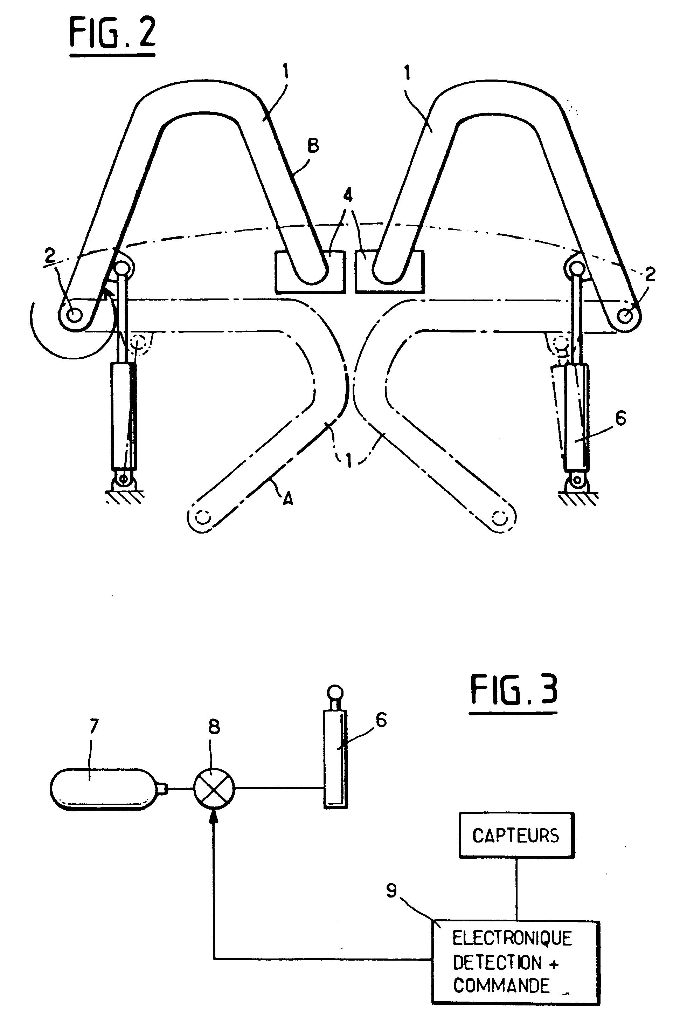

- La figure 2 est une vue en élévation du mécanisme du dispositif,
- La figure 3 est une vue de la commande associée au dispositif,
- La figure 4 est un schéma fonctionnel de l'électronique de pilotage du dispositif,

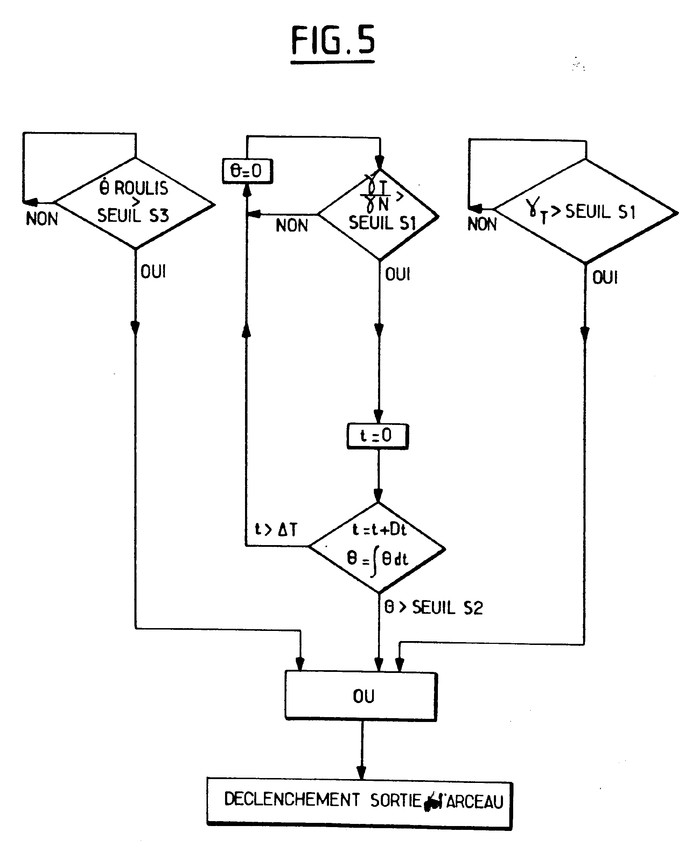

- La figure 5 est un schéma de la stratégie de pilotage,
- La figure 6 est un schéma de véhicule en différentes situations de retournement.

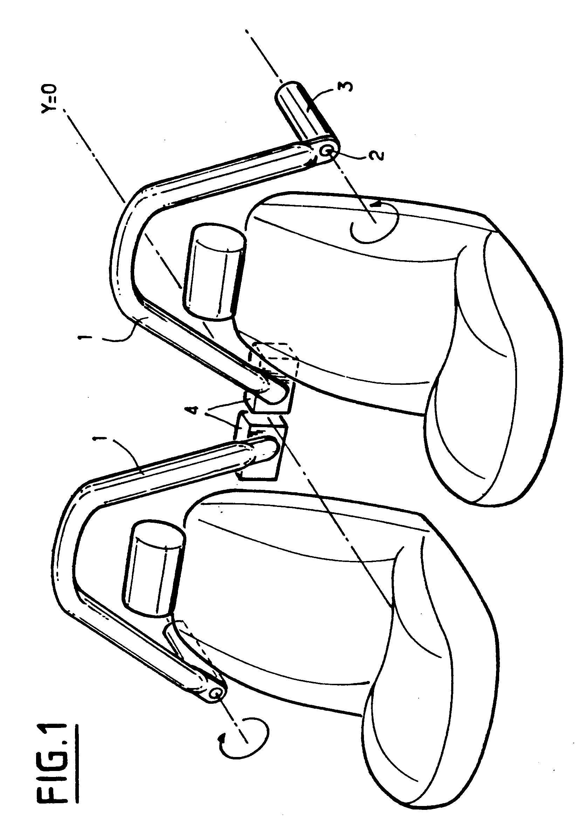

En se référant à la figure 1, le système comprend deux organes de sécurité 1. Ces organes sont des arceaux montés pivotants autour d'axes longitudinaux 2 du véhicule sur des supports 3 fixés latéralement à la caisse du véhicule. Il y a un arceau par siège.

En position de repos, ces arceaux sont repliés dans la position A, derrière les sièges à l'intérieur de l'enveloppe de caisse. Ils présentent des moyens d'accrochage coopérant avec des verrous 4. Ils peuvent se déployer, en pivotant, jusqu'à ce que les organes d'accrochage viennent s'enclencher dans les verrous 4. Dans la position déployée repérée B, les arceaux assurent la sécurité des passagers. Chaque arceau débat derrière le siège dans un plan transversal vertical.

Le mouvement de pivotement est donné par des organes d'actionnement par exemple des vérins pneumatiques 6 actionnés chacun par du gaz haute pression contenu dans une cartouche 7. L'arrivée du gaz sous pression dans le vérin 6 est contrôlée par une vanne pyrotechnique 8 commandée par une unité électronique 9.

L'électronique 9 reçoit les informations d'un gyromètre 10 de mesure du roulis, d'un accéléromètre 11 longitudinal, d'un accéléromètre 12 transversal, d'un accéléromètre 13 vertical.

Les signaux de mesure provenant des accéléromètres longitudinal et transversal 11 et 12 sont envoyés à un circuit de calcul 14 qui détermine un module d'accélération dans le plan du véhicule. Ce calcul est du type $K_T (\gamma_T)^2 + K_L (\gamma_L)^2$. Le signal du circuit 14 est envoyé à deux comparateurs 15 et 25 qui déterminent si le signal dépasse ou non les seuils $S_4$ et $S_6$ prédéterminés.

Les signaux provenant des accéléromètres transversal et vertical 12 et 13 sont envoyés à un comparateur 16 déterminant si le rapport $\dfrac{\gamma T}{\gamma N}$ dépasse un seuil $S_1$ prédéterminé.

Les signaux de sortie des circuits 15 et 16 sont envoyés par l'intermédiaire d'un circuit OU 17 à un circuit 18.

Le signal du circuit 25 envoie un signal de validation à une commande 24 par l'intermédiaire d'un circuit OU 23.

Le signal provenant du gyromètre à roulis 10 indique la vitesse angulaire de roulis. Ce signal est envoyé à un circuit d'intégration 19 assurant l'intégration du signal vitesse du gyromètre à roulis 10 et à un comparateur 22. Le circuit d'intégration 19 reçoit le signal du circuit 18.

L'intégration du signal vitesse de roulis est assurée par le circuit 19 pendant une période de temps prédéterminée. Ce signal intégré est envoyé à un comparateur 20 qui, si le signal dépasse un seuil prédéterminé $S_2$, envoie un signal de validation à une commande 24 par l'intermédiaire d'un circuit OU 23. Cette stratégie permet d'intégrer le signal vitesse de roulis pendant des périodes de temps finies, ce qui permet de s'affranchir ainsi des problèmes de dérive dûs aux offsets.

Le signal du gyromètre 10 est envoyé à un comparateur 22 déterminant si le signal dépasse un seuil prédéterminé $S_3$. Le signal de sortie du comparateur 22 est envoyé avec le signal du comparateur 20 sur le circuit OU 23 commandant le dispositif 24 d'actionnement du vérin.

Les différents seuils et la période de temps durant laquelle on autorise l'intégration sont définis en fonction du véhicule (structure, dynamique).

La commande électronique du système tient compte des diverses situations de retournement.

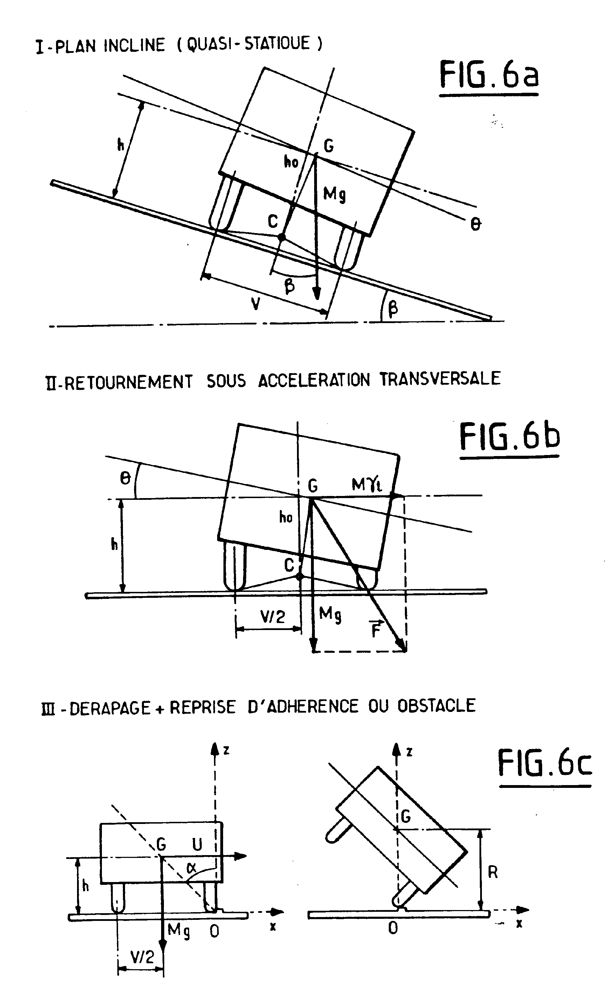

Si le seuil $S_1$ est dépassé, c'est-à-dire si le rapport accélération transversale 12 sur accélération verticale 13 est supérieur à ce seuil, l'intégration du signal du gyromètre 10 est réalisée pendant la période de temps $\Delta T$ définie par le circuit 18. Si la valeur de cette intégrale est supérieure au seuil $S_2$, le comparateur 20 déclenche la commande du système de sécurité. Cette commande intervient, en particulier, en cas de retournement sur plan incliné (figure 6A). Dans ce cas, le vecteur $M_9$ sort du triangle de substentation du véhicule (triangle de substentation défini par la hauteur du centre de gravité et la demi-voie du véhicule.

Ce cas peut aussi se produire en cas de dérapage suivi d'une reprise d'adhérence ou d'un obstacle (figure 6C). Ce dérapage peut se produire même sous faible accélération transversale si le véhicule est sur un sol de faible adhérence.

Au moment de la reprise d'adhérence ou du choc contre l'obstacle, le rapport d'accélération transversale sur accélération verticale peut dépasser le seuil $S_1$ et autoriser l'intégration du signal vitesse angulaire du roulis 10.

Si la valeur du module de l'accélération dans le plan horizontal du véhicule donné par l'expression $K_T (\gamma_T)^2 + K_L (\gamma_L)^2$ est supérieure au seuil $S_4$, l'intégration du signal du gyromètre 10 est réalisée par le circuit 19 pendant la période de temps $\Delta T$ définie par le circuit 18. Si la valeur de l'intégrale dépasse le seuil $S_2$, le comparateur 20 déclenche la commande de l'arceau. Cette commande intervient dans les cas illustrés figures 6B, 6C déjà pris en compte dans le cas précédent. Mais on fait intervenir la notion d'anticipation intéressante pour obtenir un meilleur temps de réponse en comportement dynamique du véhicule.

Si la valeur de la vitesse angulaire de roulis est supérieure au seuil $S_3$, le comparateur 22 déclenche la commande de l'arceau.

Si la valeur du module de l'accélération dans le plan horizontal du véhicule est supérieure au seuil $S_5$, on déclenche la commande de l'arceau. Cette commande intervient notamment en cas de choc latéral violent.

Le système de sécurité pourrait être appliqué à d'autres organes de sécurité qu'un arceau de sécurité.

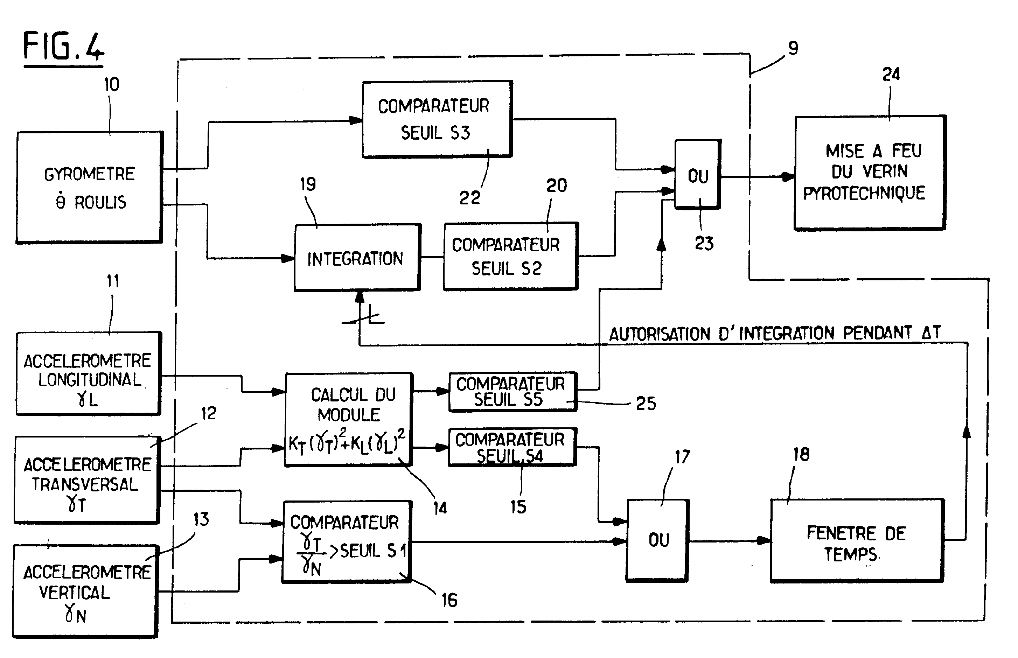

En résumé, le dispositif électronique dont le schéma synoptique est donné figure 4, permet la mise à feu du vérin lorsque l'une au moins des conditions suivantes est réalisée :

- le module de l'accélération dans le plan horizontal du véhicule est supérieur au seuil $S_5$,
- la vitesse angulaire de roulis est supérieure au seuil $S_3$,
- Le module de l'accélération dans le plan horizontal du véhicule est supérieur au seuil $S_4$ et l'angle de roulis est supérieur au seuil $S_2$,
- le rapport accélération transversale sur accélération verticale est supérieure au seuil $S_1$ et l'angle de roulis est supérieur au seuil $S_2$.

## Revendications

1. Système de sécurité pour véhicule automobile, comportant des moyens (9) pour commander au moins un organe de sécurité (1) en situation de retournement du véhicule automobile, caractérisé par le fait qu'il comporte un gyromètre (10) mesurant la vitesse de rotation de roulis et des accéléromètres(11, 12, 13) et des moyens électroniques (9) pour traiter les signaux de ce gyromètre et des accéléromètres pour commander l'actionnement de l'organe de sécurité (1).

2. Système selon la revendication 1, caractérisé par le fait qu'il comporte des moyens de traitement (16) pour calculer le rapport d'accélération transversale sur l'accélération verticale et si ce rapport dépasse un seuil prédéterminé ($S_1$) pour autoriser l'intégration de la vitesse angulaire de roulis issue du gyromètre (10) pendant une période de temps prédéterminée et si le signal résultant de l'intégration dépasse une valeur seuil prédéterminée ($S_2$) pour commander l'actionnement de l'organe de sécurité (1).

3. Système selon l'une quelconque des revendications précédentes, caractérisé par le fait qu'il comporte des moyens de traitement (14) pour calculer un module de l'accélération dans le plan du véhicule à partir des signaux d'accélération longitudinale et d'accélération transversale des accéléromètres (11,12) et si cette valeur dépasse un seuil ($S_4$) prédéterminé pour autoriser l'intégration de la vitesse angulaire de roulis issue du gyromètre (10) pendant une période de temps prédéterminée et si le signal résultant de l'intégration dépasse une valeur seuil prédéterminée ($S_2$) pour commander l'actionnement de l'organe de sécurité (1).

4. Système selon l'une quelconque des revendications précédentes, caractérisé par le fait que la commande du système de sécurité (1) est actionnée lors de forte valeur de la vitesse de rotation de roulis du véhicule.

5. Système selon la revendication 1, caractérisé par le fait qu'il comporte des moyens de traitement (14) pour calculer un module de l'accélération dans le plan du véhicule à partir des signaux d'accélération transversale et d'accélération longitudinale et si ce module dépasse un seuil prédéterminé ($S_5$) pour commander l'actionnement de la commande de l'organe de sécurité (1).

6. Système selon l'une quelconques des revendications précédentes, caractérisé par le fait que l'organe de sécurité (1) est un arceau mobile de sécurité.

7. Système selon la revendication 6, caractérisé par le fait que cet arceau (1) est monté pivotant autour d'un axe longitudinal (2) du véhicule et porte des moyens d'accrochage susceptibles de s'enclencher dans un verrou (4).

8. Système selon l'une quelconque des revendications 6 et 7, caractérisé par le fait qu'il comporte deux arceaux associés chacun à un siège.

**Patentansprüche**

1. Sicherheitssystem für Kraftfahrzeuge, mit einer Anordnung (9) zur Steuerung wenigstens eines Sicherheitsteils (1) im Falle eines Überschlags des Kraftfahrzeugs, dadurch gekennzeichnet, daß es ein Gyrometer (10) aufweist, welches die Drehgeschwindigkeit der Wankbewegung mißt und Beschleunigungsmesser (11, 12, 13) aufweist und eine elektronische Anordnung (9) aufweist zur Verarbeitung der vom Gyrometer und von den Beschleunigungsmessern stammenden Signale zur Steuerung der Auslösung des Sicherheitsteils (1) .

2. Sicherheitssystem nach Anspruch 1, dadurch gekennzeichnet, daß es eine Verarbeitungsanordnung (16) aufweist zur Berechnung des Verhältnisses von Querbeschleunigung zu Vertikalbeschleunigung und, wenn dieses Verhältnis einen vorgegebenen Schwellwert (S1) überschreitet, zur Durchführung einer Integration der Winkelgeschwindigkeit der Wankbewegung, die vom Gyrometer (10) erhalten wird während einer vorgegebenen Zeitdauer und, wenn das von der Integration stammende Signal einen vorgegebenen Schwellwert (S2) überschreitet, zur Steuerung der Auslösung des Sicherheitsteils (1).

3. System nach einem der vorhergehenden Ansprüche, dadurch gekennzeichnet, daß es eine Verarbeitungsanordnung (14) aufweist zur Berechnung eines Modulbeschleunigungssignals in der Fahrzeugebene aus den Signalen der Längsbeschleunigung und der Querbeschleunigung der Beschleunigungsmesser (11, 12) und, wenn dieser einen vorgegebenen Schwellwert (S4) überschreitet, zur Durchführung einer Integration der Winkelgeschwindigkeit der Wankbewegung, die vom Gyrometer (10) erhalten wird während einer vorgegebenen Zeitdauer und, wenn das von der Integration stammende Signal einen vorgegebenen Schwellwert (S2) überschreitet, zur Steuerung der Auslösung des Sicherheitsteils (1).

4. System nach einem der vorhergehenden Ansprüche, dadurch gekennzeichnet, daß die Steuerung des Sicherheitssystems (1) ausgelöst wird bei einem großen Wert der Drehgeschwindigkeit der Wankbewegung.

5. System nach Anspruch 1, dadurch gekennzeichnet, daß es eine Verarbeitungsanordnung (14) aufweist zur Berechnung eines Modulbeschleunigungssignals in der Fahrzeugebene aus den Signalen der Querbeschleunigung und der Längsbeschleunigung und, wenn dieses Modulsignal einen vorgegebenen Schwellwert (S5) überschreitet, zur Steuerung der Auslösung des Sicherheitsteils (1).

6. System nach einem der vorhergehenden Ansprüche, dadurch gekennzeichnet, daß das Sicherheitsteil (1) ein beweglicher Sicherheitsbügel ist.

7. System nach Anspruch 6, dadurch gekennzeichnet, daß dieser Bügel (1) um eine Längsachse (2) des Fahrzeugs verschwenkbar angeordnet ist und Verankerungsteile aufweist, die in eine Verriegelung (4) eingreifen können.

8. System nach einem der Ansprüche 6 und 7, dadurch gekennzeichnet, daß es zwei Bügel aufweist, deren jeder einem Sitz zugeordnet ist.

**Claims**

1. A safety system for a motor car, comprising means (9) of operating at least one safety device (1) in a situation involving the motor car turning over, characterised in that it comprises a gyrometer (10) measuring the speed of rotation in a rollover and accelerometers (11, 12, 13) and electronic means (9) of processing the signals from this gyrometer and from the accelerometers in order to actuate the safety device (1).

2. A system according to Claim 1, characterised in that it comprises processing means (16) for calculating the ratio of transverse acceleration to vertical acceleration and, if this ratio exceeds a predetermined threshold ($S_1$), for authorising integration of the angular speed of roll-over emanating from the gyrometer (10) during a predetermined period of time and actuating the safety device (1) in the event of the signal resulting from integration exceeding a predetermined threshold value ($S_2$).

3. A system according to either of the preceding Claims, characterised in that it comprises processing means (14) for calculating an acceleration modulus in the plane of the vehicle on the basis of longitudinal acceleration and transverse acceleration signals from the accelerometers (11, 12) and, if this value exceeds a predetermined threshold ($S_4$), for authorising integration of the angular speed of roll-over emanating frcm the gyrometer (10) during a predetermined length of time and actuating the safety device (1) in the event of the signal resulting from integration exceeding a predetermined threshold value ($S_2$).

4. A system according to any one of the preceding Claims, characterised in that operation of the safety system (1) is actuated upon a high level of roll-over speed of the vehicle.

5. A system according to Claim 1, characterised in that it comprises processing means (14) for calculating an acceleration modulus in the plane of the vehicle on a basis of transverse and longitudinal acceleration signals and of actuating the safety device (1) in the event of this modulus exceeding a predetermined threshold ($S_5$).

6. A system according to any one of the preceding Claims, characterised in that the safety device (1) is a movable bow-shaped roll bar.

7. A system according to Claim 6, characterised in that this roll bar (1) is mounted to pivot about a longitudinal spindle (2) in the vehicle and carries hooking means adapted to engaged locking means (4).

8. A system according to either of Claims 6 or 7, characterised in that it comprises two associated bow-shaped roll bars, each associated with one seat.

FIG.1

EP 0 430 813 B1

FIG. 2

FIG. 3

CAPTEURS

ELECTRONIQUE
DETECTION +
COMMANDE

# FIG.4

EP 0 430 813 B1

# FIG.5

I-PLAN INCLINE ( QUASI-STATIQUE )

## FIG.6a

II-RETOURNEMENT SOUS ACCELERATION TRANSVERSALE

## FIG.6b

III-DERAPAGE + REPRISE D'ADHERENCE OU OBSTACLE

## FIG.6c